# FASCICULE DE BREVET EUROPEEN

(11) **EP 3 649 663 B1**
(45) Date de publication et mention de la délivrance du brevet: **28.08.2024**
(21) Numéro de dépôt: 18752564.7
(22) Date de dépôt: 06.07.2018
(51) Int. Cl.: H01G 11/06, H01G 11/36, H01G 11/86, C01B 32/162

(54) **PROCÉDÉ DE PRÉPARATION D'UNE ÉLECTRODE COMPRENANT UN SUPPORT, DES NANOTUBES DE CARBONE ALIGNÉS ET UN OXYDE MÉTALLIQUE DÉPOSÉ PAR VOIE OXYDANTE, LADITE ÉLECTRODE ET SES UTILISATIONS.**
VERFAHREN ZUR HERSTELLUNG EINER ELEKTRODE MIT EINEM SUBSTRAT, AUSGERICHTETEN KOHLENSTOFFNANORÖHREN UND EINEM DURCH OXIDATIVE ABSCHEIDUNG ABGESCHIEDENEN METALLOXID, ELEKTRODE UND VERWENDUNGEN DAVON
METHOD FOR PREPARING AN ELECTRODE COMPRISING A SUBSTRATE, ALIGNED CARBON NANOTUBES AND A METAL OXIDE DEPOSITED BY OXIDATIVE DEPOSITION, THE ELECTRODE AND USES THEREOF.

(30) Priorité: 07.07.2017 FR 1756474
(43) Date de publication de la demande: 13.05.2020
(73) Titulaire: Commissariat à l'Energie Atomique et aux Energies Alternatives, 75015 Paris (FR); Université de Tours, 37020 Tours Cedex 1 (FR)
(72) Inventeur: PINAULT, Mathieu, 94260 Fresnes (FR); GHAMOUSS, Fouad, 37300 Joues-Les-Tours (FR); TRAN VAN, François, 37230 Fondettes (FR); CHARON, Emeline, 75013 Paris (FR); PIBALEAU, Baptiste, 91600 Savigny Sur Orge (FR)
(74) Mandataire: Brevalex
(86) Numéro de dépôt international: PCT/FR2018/051708
(87) Numéro de publication internationale: WO 2019/008299

(56) Documents cités:
- REZA KAVIAN ET AL: "Composite Supercapacitor Electrodes by Electrodeposition of MnO2 on MWCNT Felt Directly Grown on Aluminum", JOURNAL OF NEW MATERIALS FOR ELECTROCHEMICAL SYSTEMS 18, 043-048, 11 February 2015 (2015-02-11), XP055454244, Retrieved from the Internet <URL:http://new-mat.org/ejournal/index.php/jnmes/article/view/388> [retrieved on 20180226]
- HAO ZHANG ET AL: "Growth of Manganese Oxide Nanoflowers on Vertically-Aligned Carbon Nanotube Arrays for High-Rate Electrochemical Capacitive Energy Storage", NANO LETTERS, vol. 8, no. 9, 10 September 2008 (2008-09-10), pages 2664 - 2668, XP055454213, ISSN: 1530-6984, DOI: 10.1021/nl800925j
- FAN Z ET AL: "Preparation and characterization of manganese oxide/CNT composites as supercapacitive materials", DIAMOND AND RELATED MATERIALS, ELSEVIER SCIENCE PUBLISHERS, AMSTERDAM, NL, vol. 15, no. 9, 1 September 2006 (2006-09-01), pages 1478 - 1483, XP028000693, ISSN: 0925-9635, [retrieved on 20060901], DOI: 10.1016/J.DIAMOND.2005.11.009
- RUIFENG ZHOU ET AL: "High-performance supercapacitors using a nanoporous current collector made from super-aligned carbon nanotubes;High-performance supercapacitors using a nanoporous current collector made from super-aligned carbon nanotubes", NANOTECHNOLOGY, IOP, BRISTOL, GB, vol. 21, no. 34, 4 August 2010 (2010-08-04), pages 345701, XP020196037, ISSN: 0957-4484, DOI: 10.1088/0957-4484/21/34/345701
- JIANWEI LIU ET AL: "Hybrid Supercapacitor Based on Coaxially Coated Manganese Oxide on Vertically Aligned Carbon Nanofiber Arrays", CHEMISTRY OF MATERIALS, vol. 22, no. 17, 14 September 2010 (2010-09-14), pages 5022 - 5030, XP055454216, ISSN: 0897-4756, DOI: 10.1021/cm101591p
- D. REHNLUND ET AL: "Electrodeposition of Vanadium Oxide/Manganese Oxide Hybrid Thin Films on Nanostructured Aluminum Substrates", JOURNAL OF THE ELECTROCHEMICAL SOCIETY, vol. 161, no. 10, 16 July 2014 (2014-07-16), US, pages D515 - D521, XP055454218, ISSN: 0013-4651, DOI: 10.1149/2.0511410jes

## Description

### DOMAINE TECHNIQUE

La présente invention appartient au domaine des dispositifs de stockage et de restitution d'énergie électrique et plus particulièrement au domaine des électrodes notamment utiles pour des supercondensateurs.

En effet, la présente invention concerne un procédé pour préparer une électrode présentant (i) un support métallique, (ii) des nanotubes de carbone verticalement alignés sur ledit support et (iii) un oxyde métallique déposé sur toute la longueur desdits nanotubes de carbone par voie oxydante i.e. par voie électrochimique anodique.

La présente invention concerne également ladite électrode ainsi préparée et ses différentes utilisations et notamment dans un supercondensateur.

### ÉTAT DE LA TECHNIQUE ANTÉRIEURE

Pour permettre l'essor des énergies renouvelables et la réduction des émissions de gaz, le stockage de l'électricité est l'un des plus grands défis à relever. Parmi les nombreuses sources autonomes, les supercondensateurs, basés sur des cycles rapides de charge/décharge d'ions sur des surfaces carbonées, se situent entre les condensateurs et les batteries. Leur efficacité de stockage élevée (> 95%), leur sécurité, leur fiabilité et leur durée de vie en font de bons candidats pour compléter ou remplacer les solutions existantes telles que, par exemple, batteries électrochimiques, volants ou stockage magnétique.

Les supercondensateurs dont le marché est en plein essor possèdent deux électrodes i.e. une anode et une cathode qui sont isolées électriquement par un séparateur, un électrolyte étant disposé entre chaque électrode et le séparateur.

L'un des paramètres important pour un supercondensateur est la capacitance du système. Cette dernière dépend principalement de la corrélation entre les matériaux choisis pour les électrodes, du design de ces électrodes et de l'électrolyte.

Dans les supercondensateurs commerciaux, la surface des électrodes est composée de carbone activé. Ce dernier est un matériau poreux, conducteur électronique, stable électrochimiquement et fournissant une surface par unité de volume élevée i.e. supérieure à 500 m².g⁻¹. Toutefois, la porosité du carbone activé est difficilement contrôlable : elle dépend, d'une part, de la porosité de la matière première utilisée telle que de la matière organique végétale riche en carbone et, d'autre part, du procédé d'activation physique ou chimique mis en oeuvre. L'existence d'une porosité complexe et mal maîtrisée dans le carbone activé mais aussi l'existence de groupements fonctionnels indésirables à sa surface affectent la capacitance et les performances des supercondensateurs en carbone activé.

Dans ce contexte, l'utilisation de nanomatériaux bien organisés à l'échelle nanométrique tels que des nanotubes de carbone verticalement alignés (ou VACNT pour « Vertically Aligned Carbon NanoTubes ») est très prometteuse. Plusieurs matériaux d'électrode à base de VACNT ont démontré des capacitances spécifiques intéressantes, validant ainsi l'intérêt d'une telle configuration (alignement et espacement régulier des nanotubes dans le matériau) en termes de gain en énergie et surtout de puissance du supercondensateur. A noter que, dans le cadre des supercondensateurs, le support métallique sur lequel les VACNT sont préparés est utilisé comme collecteur de courant. Pour minimiser le poids des électrodes et, par conséquent, le poids des supercondensateurs, des supports métalliques légers tels que des supports en aluminium sont à privilégier.

Pour accroître l'énergie stockée des VACNT, une des solutions consiste à les combiner avec des matériaux électroactifs déposés sur les VACNTtels que les polymères conducteurs électroniques (PCE) ou des oxydes métalliques. On parle alors de pseudocapacitance. Dans ce cas, l'énergie est stockée par deux processus simultanés : processus électrostatique et processus redox.

En ce qui concerne les matériaux d'électrodes à base de VACNT et d'oxyde métallique, l'oxyde de manganèse (MnO₂) est l'un des matériaux les plus prometteurs en raison de son faible coût, son abondance naturelle, son aspect respectueux de l'environnement et ses performances pseudocapacitives. Les performances électrochimiques du MnO₂ sont largement tributaires de ses propriétés morphologiques et de sa surface spécifique. En général, la structure chimique, la morphologie, la surface spécifique, la porosité, la conductivité électrique et le transport ionique dans les pores jouent un rôle crucial dans la détermination des performances électrochimiques de MnO₂.

Parmi les procédés utilisables pour déposer du MnO₂, on peut citer le dépôt électrochimique, le dépôt hydrothermal, la synthèse sol-gel mais aussi le dépôt par voie réductrice ou dépôt spontané par voie chimique. L'état de la technique est riche en publications liées au dépôt électrochimique de MnO₂ sur des VACNT.

En effet, Fan *et al*, 2008, **[1],** ont préparé des VACNT directement sur du graphite par PE-HF-CVD (pour « Plasma-Enhanced Hot Filament Chemical Vapor Déposition ») puis les VACNT, de 1,5 µm de longueur, ont été revêtus par du MnO₂ via un dépôt électrochimique galvanostatique dans lequel un électrolyte à base de sulfate de sodium à 0,1 M et de polyglycol à 5 g.L⁻¹ et une solution dite « supplied solution » d'acétate de manganèse à 0,1 M et de sulfate de sodium à 0,1 M sont utilisés (cf. schéma 1, page 1944). La caractérisation de l'électrode ainsi obtenue montre une capacitance spécifique de 784 Fg⁻¹ par masse d'oxyde et une capacitance totale du composite VACNT/MnO₂ de 234 Fg⁻¹.

Amade *et al,* 2011, **[2],** ont montré le dépôt de MnO₂ par voie électrochimique (galvanostatique ou potentiostatique) en surface de VACNT formés par PECVD (pour « Plasma-Enhanced Chemical Vapor Déposition ») en présence de NH₃ sur substrat de silicium (tapis de 10 µm de longueur) et obtiennent des capacitances spécifiques allant jusqu'à 642 Fg⁻¹ par masse d'oxyde. Toutefois, le MnO₂ ne semble associé aux nanotubes de carbone (NTC) qu'en surface et aucune preuve n'est apportée de la présence de l'oxyde le long des NTC au coeur des tapis alignés. Plus important encore, la capacitance totale du composite VACNT/MnO₂ n'est pas donnée.

La demande de brevet CN 103346021 **[3]** décrit l'élaboration de condensateurs électrochimiques dans lesquels l'électrode positive est constituée d'un composite à base de tapis de nanotubes de carbone alignés qui peut être directement formé sur un substrat conducteur et d'oxyde de manganèse ou de polyaniline et l'électrode négative est constituée d'un tapis de nanotubes de carbone alignés qui peut être directement formé sur un substrat conducteur et de polypyrrole, les électrolytes étant des électrolytes non aqueux. Dans un des exemples présentés, les VACNT sont formés sur une feuille de titane à 800°C avec du ferrocène/éthanol en présence d'argon/hydrogène. Puis, ces VACNT sont mis en contact avec une solution de sulfate de sodium et d'ions Mn²⁺ et du MnO₂ est électrodéposé sur les VACNT en une quantité de 47% en poids par rapport au poids total du composite via une technique de chronoampérométrie constante.

Ainsi, la méthode de dépôt électrochimique anodique est très souvent utilisée pour la réalisation de MnO₂ à partir d'une solution aqueuse contenant des cations Mn²⁺. Cependant cette voie nécessite une polarisation du substrat à recouvrir par le MnO₂ (électrode de travail) qui peut générer son oxydation et sa corrosion (dissolution). L'aluminium est un collecteur de courant particulièrement sensible au phénomène de corrosion notamment en milieu aqueux et plus particulièrement quand il est polarisé anodiquement.

Kavian et al, 2015 (Journal of New Materials for Electrochemical Systems, vol. 18, pages 043-048) propose une électrode composite comprenant support en aluminium, des nanotubes de carbone à parois multiples (MWCNT) qui ne se présentent pas sous forme verticalement alignée (« MWCNT felt ») et une couche de MnO₂. De plus, pour obtenir le revêtement en MnO₂, une technique d'électrodépôt anodique en présence d'une solution électrolytique constituée d'acétate de manganèse à 0,01 M est utilisée.

Zhang et al, 2008 (Nano Letters, vol. 8, pages 2664-2668) décrit la préparation d'électrodes comprenant un support métallique en tantale sur lequel sont synthétisés, par CVD, des VACNT, du MnO₂ étant ensuite électrodéposé, via une technique potentiodynamique, à partir d'une solution électrolytique consistant en du sulfate de sodium (Na₂SO₄) à 1 M et du sulfate de manganèse (MnSO₄) à 0,5 M.

Zhou et al, 2010 (Nanotechnology, vol. 21, 345701) propose un collecteur de courant pour supercondensateur remplaçant les collecteurs métalliques habituels par un film de nanotubes de carbone. Clairement, aucun support métallique tel qu'un support en aluminium n'est mis en oeuvre. Le procédé de préparation proposé par Zhou *et al*, 2010 consiste à empiler, les unes sur les autres, des couches de nanotubes de carbone alignés, l'orientation des nanotubes dans une couche étant perpendiculaire à l'orientation dans la couche suivante, puis à synthétiser des particules d'oxyde métallique sur ces nanotubes de carbone via la décomposition thermique de précurseurs du type nitrate de cet oxyde métallique.

Du fait de l'intérêt grandissant des supercondensateurs, les inventeurs se sont fixés pour but de proposer un procédé industrialisable permettant d'obtenir une électrode notamment destinée à être utilisée dans un supercondensateur qui présente (i) un support métallique, (ii) des VACNT sur ledit support et (iii) un oxyde métallique électrodéposé, de façon homogène, sur toute la longueur desdits VACNT, ledit procédé devant pouvoir être appliqué quel que soit le support métallique mis en oeuvre.

### EXPOSÉ DE L'INVENTION

La présente invention permet de résoudre les problèmes techniques tels que précédemment définis et d'atteindre le but que se sont fixé les inventeurs.

En effet, les travaux des inventeurs ont permis de mettre au point un procédé industrialisable permettant d'obtenir une électrode avec un support métallique sur lequel des nanotubes de carbone sont verticalement alignés et revêtus d'un oxyde métallique, ladite électrode présentant des performances en termes de capacitance intéressantes pour notamment une application dans un supercondensateur. Pour rappel, la capacitance est la propriété d'un conducteur électrique à contenir un certain niveau de charge électrique pour un potentiel électrique déterminé.

Plus particulièrement, la présente invention concerne un procédé pour la préparation d'une électrode comprenant un support métallique, des nanotubes de carbone verticalement alignés et un oxyde métallique déposé sur toute la longueur desdits nanotubes de carbone verticalement alignés, ledit procédé comprenant les étapes successives suivantes :
a) synthétiser, sur un support métallique, un tapis de nanotubes de carbone verticalement alignés ;
b) déposer électrochimiquement ledit oxyde métallique sur lesdits nanotubes de carbone à partir d'une solution électrolytique comprenant au moins un précurseur dudit oxyde métallique et au moins un nitrate comme anion de l'électrolyte.

Les inventeurs ont associé, à la synthèse d'un tapis de VACNT sur un support métallique, un dépôt électrochimique d'oxyde métallique dans des conditions particulières permettant d'obtenir un dépôt homogène sur toute la longueur des VACNT, c'est-à-dire dans l'épaisseur du tapis de VACNT et ce, sans éroder ledit support. Ces conditions particulières sont liées aux propriétés physico-chimiques de la solution électrolytique.

Dans le cadre de la présente invention, les éléments essentiels contenus dans la solution électrolytique particulière mise en oeuvre lors du dépôt électrochimique sont au moins un précurseur dudit oxyde métallique nécessaire pour obtenir l'électrodépôt de l'oxyde métallique et un électrolyte particulier se présentant sous forme d'un sel dont l'anion est un nitrate (NO₃⁻). En effet, fait surprenant, malgré le caractère corrosif de nombreux sels que peut contenir cette solution électrolytique vis-à-vis de l'aluminium (voir le point I de la partie expérimentale ci-après), une solution électrolytique comprenant un nitrate permet de préparer une électrode présentant de bonnes performances et donc particulièrement adaptée à une utilisation dans un supercondensateur et ce, quelle que soit la nature chimique du support mis en oeuvre.

La présente invention s'applique à tout type de nanotubes de carbone verticalement alignés et ce quel que soit leur procédé de préparation. Ainsi, les nanotubes de carbone mis en oeuvre dans le cadre de la présente invention peuvent être des nanotubes à une seule couche de graphène (SWNT), des nanotubes à deux couches de graphène (DWNT), des nanotubes à plusieurs couches de graphène (MWNT) ou un de leurs mélanges.

L'étape (a) du procédé selon l'invention consiste à synthétiser, sur un support métallique, des nanotubes de carbone verticalement alignés et s'étendant perpendiculairement à la surface du support formant ainsi un tapis de nanotubes dont la base correspond au support.

Dans le cadre de la présente invention, le support métallique sur lequel les VACNT sont préparés est avantageusement un support en un matériau à base de titane, de nickel, d'aluminium, de cuivre, de chrome, de tantale, de platine, d'or, d'argent ou d'acier inoxydable, de silicium ou de carbone.

Par « matériau à base d'un métal donné », on entend aussi bien un matériau en ledit métal non allié qu'un matériau en un alliage comprenant ledit métal et au moins un autre élément et notamment au moins un autre élément métallique.

Il convient de noter que, pour minimiser le poids des électrodes et, par conséquent, le poids des supercondensateurs, des supports métalliques légers tels que des supports à base d'aluminium sont à privilégier. Par « matériau à base d'aluminium », on entend aussi bien un matériau en aluminium non allié qu'un matériau en un alliage d'aluminium tel qu'un alliage d'aluminium et de magnésium, un alliage d'aluminium et de manganèse, un alliage d'aluminium et de cuivre, un alliage d'aluminium et de silicium, un alliage d'aluminium, de magnésium et de silicium ou encore un alliage d'aluminium et de zinc.

Le support mis en oeuvre dans l'invention présente une forme quelconque i.e. une forme adaptée à l'utilisation ultérieure de l'électrode. A titre d'exemples illustratifs, ce support peut présenter une forme plane, une forme filaire (fil tissé, fil non tissé, fibre, grille), une forme de ruban, une forme cylindrique creuse ou encore une forme alvéolaire (mousse). Typiquement le support mis en oeuvre dans l'invention présente une épaisseur comprise entre 1 µm et 500 µm, notamment entre 2 µm et 200 µm, en particulier, entre 5 µm et 100 µm et, plus particulièrement, entre 10 µm et 75 µm.

L'homme du métier connaît différents procédés permettant de préparer des nanotubes verticalement alignés tels que précédemment définis, lesdits procédés étant utilisables dans l'étape (a) du procédé selon l'invention.

A titre d'exemples plus particuliers de procédés permettant de préparer des nanotubes de carbone verticalement alignés, on peut citer les procédés physiques basés sur la sublimation du carbone tels que des méthodes d'arc électrique, d'ablation laser ou utilisant un four solaire et les procédés chimiques tels que le procédé CVD ou consistant à pyrolyser des sources carbonées sur des catalyseurs métalliques. Un procédé particulièrement adapté à la préparation de NTC est la méthode de CVD-injection notamment décrite dans l'article de Pinault *et al*, 2005 **[4]** et l'article de Pinault *et al*, 2005 **[5].**

Dans un mode de réalisation particulier, le procédé de synthèse mis en oeuvre i.e. utilisant la technique de dépôt chimique en phase vapeur (ou CVD pour « Chemical Vapor Déposition ») à une température inférieure ou égale à 650°C est notamment le procédé décrit dans **[6-9].** Comme ces techniques sont réalisables par lots (technique dite en anglais « batch-to-batch »)/en défilé continu (technique dite en anglais « roll to roll »), elles sont facilement industrialisables.

Brièvement, cette synthèse se fait en présence d'une source catalytique et d'une source de carbone. La source catalytique peut être pré-déposée sur le support ou, au contraire, être co-injectée avec la source de carbone. La source catalytique est notamment choisie parmi les métallocènes de métal de transition comme, par exemple, le ferrocène, le nickelocène, le cobaltocène ou l'un quelconque de leurs mélanges. La source carbonée qui peut être liquide, solide ou gazeuse est notamment choisie parmi les hydrocarbures, les alcools, le monoxyde de carbone, les halogénures de carbone, le toluène, le cyclohexane, les huiles d'origine végétale, la benzylamine, l'acétonitrile, l'éthylène, l'acétylène, le xylène, le méthane et l'un quelconque de leurs mélanges. Dans un mode de réalisation particulier de cette synthèse, le ferrocène est véhiculé dans le réacteur à l'aide d'une solution de toluène mise sous forme d'aérosol.

Dans ce mode de réalisation particulier de l'étape (a) du procédé selon l'invention, cette synthèse est avantageusement réalisée à une température comprise entre 500°C et 620°C. De même, cette synthèse est typiquement réalisée à une pression comprise entre 10³ Pa et 10⁵ Pa et, en particulier, entre 0,9.10⁵ Pa et 10⁵ Pa.

En fonction du protocole particulier utilisé pour la synthèse des nanotubes de carbone lors de l'étape (a) du procédé, la densité des nanotubes de carbone verticalement alignés s'étendant perpendiculairement au support métallique peut être variable. Cette dernière est avantageusement comprise entre 10⁶ et 10¹³ nanotubes.cm⁻² de support. Il est ainsi possible d'avoir un matériau présentant un tapis dense de nanotubes de carbone verticalement alignés, avec de l'ordre de 10⁸ à 10¹² nanotubes.cm⁻² et notamment de l'ordre de 10¹¹ à 10¹² nanotubes.cm⁻².

Suite à la synthèse des nanotubes de carbone verticalement alignés et préalablement à l'étape (b), les nanotubes de carbone verticalement alignés peuvent être soumis à un traitement (ou pré-traitement) oxydant i.e. visant à oxyder la surface des nanotubes mis en oeuvre et/ou à préparer la surface à une future oxydation par formation de radicaux. Une oxydation modifie la surface des nanotubes notamment en fixant et/ou en introduisant, sur les extrémités ou défauts des nanotubes, des groupements riches en oxygène tels que des groupements de type carboxylique (-COOH), hydroxyle (-OH), alcoxyle (-OX avec X représentant un groupe alkyle, un groupe acyle ou un groupe aryle), carbonyle (-C=O), percarbonique (-C(=O)-O-OH) et parfois amide (-CONH).

Un tel traitement oxydant repose sur deux grands types de modifications de surface fondés sur :
- des traitements physiques tels qu'un traitement par plasma notamment d'oxygène, un traitement aux UV, un traitement aux rayons X ou γ, un traitement par irradiation aux électrons et aux ions lourds ou
- des traitements chimiques tels qu'un traitement à la potasse alcoolique, un traitement par un acide fort (HCl, H₂SO₄, HNO₃, HClO₄), un traitement à la soude, un traitement par un oxydant fort (KMnO₄, K₂Cr₂O₇, KClO₃ ou CrO₃ dans l'acide chlorhydrique, l'acide sulfurique ou dans l'acide nitrique), un traitement à l'ozone et un traitement thermique sous atmosphère oxygénée (O₂, H₂O,...).

De tels nanotubes, une fois ce traitement oxydant mis en oeuvre, peuvent se présenter sous forme de nanotubes modifiés en surface comme, par exemple, des nanotubes chargés négativement.

L'étape (b) du procédé selon la présente invention consiste à appliquer, de façon électrochimique, sur le tapis de nanotubes de carbone synthétisés lors de l'étape (a) sur le support métallique, une matrice en oxyde métallique.

Par « matrice en oxyde métallique », on entend, dans le cadre de la présente invention, une structure se présentant sous forme d'un film (ou gaine), poreux ou non poreux, à la surface des nanotubes de carbone mis en oeuvre dans le procédé de l'invention et essentiellement constituée d'un oxyde métallique. Dans le tapis de nanotubes de carbone tels qu'obtenus suite à l'étape (a) du procédé, la matrice est associée aux nanotubes de carbone en étant déposée sur toute la longueur des VACNT, c'est-à-dire sur et au niveau de la surface latérale des nanotubes de carbone, pouvant avantageusement former une gaine autour des nanotubes, ainsi que dans l'espace entre les nanotubes. Typiquement, avantageusement, l'épaisseur de cette gaine est homogène pour un nanotube de carbone et, de façon plus avantageuse, elle est homogène pour l'ensemble des nanotubes de carbone du tapis. En variante, la gaine d'oxyde métallique se présente sous forme d'aiguilles, de sphères ou rosaces, individualisées, dont le diamètre moyen est compris entre 20 et 300 nm et notamment entre 50 et 250 nm, ces aiguilles, sphères ou rosaces pouvant être régulièrement réparties au niveau de la surface latérale des nanotubes ou, au contraire, la densité de présence de ces aiguilles, sphères ou rosaces étant croissante du bas (zone en contact avec le support) vers le haut du tapis (zone la plus éloignée du support).

Par « oxyde métallique », on entend, dans le cadre de la présente invention, tout oxyde métallique typiquement utilisé pour revêtir des nanotubes de carbone et notamment des nanotubes de carbone verticalement alignés. Typiquement, l'oxyde métallique mis en oeuvre dans le cadre de la présente invention est un oxyde d'au moins un métal de transition. Avantageusement, l'oxyde métallique mis en oeuvre dans le cadre de la présente invention est choisi dans le groupe constitué par un oxyde de ruthénium (RuO₂), un oxyde de titane (TiO₂), un oxyde de manganèse (MnO, Mn₃O₄, Mn₂O₃ ou MnO₂), un oxyde de cuivre (Cu₂O), un oxyde de nickel (NiO, NiO₂ ou Ni₂O₃), un oxyde de cobalt (Co₂O₃ ou Co₃O₄), un oxyde de fer (Fe₂O₃ ou Fe₃O₄), un oxyde de chrome (CrO₂, CrO₃ ou Cr₂O₃), un oxyde de vanadium (VO₂, V₂O₃ ou V₂O₅) et un de leurs mélanges. Par « mélange », on entend, par exemple, un oxyde choisi dans le groupe constitué par CuNiO, NiCo₂O₄, CoO-RuO₂, CuO-RuO₂, Fe₂O₃-RuO₂, NiO-RuO₂ et CuNiO-RuO₂.

En fonction de l'oxyde métallique à électrodéposer sur les VACNT, l'homme du métier saura déterminer, sans effort inventif, le précurseur dudit oxyde métallique à mettre en oeuvre. A titre d'exemples illustratifs et non limitatifs de tels précurseurs, on peut citer les acétates, les nitrates, et les halogénures de ruthénium, de titane, de manganèse, de cuivre, de nickel, de cobalt, de fer, de chrome ou de vanadium tels que le biacétate de ruthénium, l'acétate de titane, l'acétate de manganèse(Il), l'acétate de manganèse(Ill), l'acétate de cuivre(ll), l'acétate de nickel(II), l'acétate de cobalt(II), l'acétate de fer(ll), l'acétate de fer(III), l'acétate de chrome(ll), l'acétate de chrome(lIl), l'acétate de vanadium(III), le nitrate de titane, le nitrate de manganèse(Il), le nitrate de manganèse(lIl), le nitrate de cuivre(II), le nitrate de nickel(II), le nitrate de cobalt(II), le nitrate de fer(ll), le nitrate de fer(lll), le nitrate de chrome(ll), le nitrate de chrome(III), le nitrate de vanadium(III), le chlorure de titane, le chlorure de manganèse(Il), le chlorure de manganèse(Ill), le chlorure de cuivre(II), le chlorure de nickel(II), le chlorure de cobalt(II), le chlorure de fer(ll), le chlorure de fer(III), le chlorure de chrome(ll), le chlorure de chrome(III) et le chlorure de vanadium(III). On privilégiera la famille des acétates lorsque le support métallique est particulièrement sensible à la corrosion (tel que l'aluminium par exemple), car elle permet d'abaisser le potentiel de dépôt d'environ 0,2 à 0,3 V.

Le (ou les) précurseur(s) de l'oxyde métallique est(sont) présent(s), dans la solution électrolytique mise en oeuvre dans la présente invention, en une quantité maximale déterminée par rapport à leur solubilité dans le solvant employé. Avantageusement, le (ou les) précurseur(s) de l'oxyde métallique est(sont) présent(s) dans la solution électrolytique mise en oeuvre dans la présente invention en une quantité comprise entre 1 mM et la limite de solubilité du ou des précurseur(s) métalliques dans le solvant choisi, typiquement cette quantité est comprise entre 1 mM à 1 M, notamment entre 0,01 M et 0.5 M, en particulier, entre 0,05 M et 0,2 M et, plus particulièrement, de l'ordre de 0,1 M (i.e. 0,1 M + 0,02 M).

Comme précédemment expliqué, les éléments essentiels de la solution électrolytique mise en oeuvre dans le procédé selon l'invention sont un (ou plusieurs) précurseur(s) de l'oxyde métallique et un électrolyte se présentant sous forme d'un sel dans lequel l'anion est un nitrate (NO₃⁻). Avantageusement, le cation de ce sel est un cation métallique alcalin tels que Li⁺, Na⁺, K⁺; un cation métallique alcalino-terreux tels que Mg²⁺, Ca²⁺ ; ou un cation métallique d'un métal de transition tels que Cu²⁺, Zn²⁺ et Al³⁺. Dans un mode de réalisation particulier, l'électrolyte mis en oeuvre dans la solution électrolytique est du LiNO₃. Avantageusement, l'électrolyte est présent dans la solution électrolytique mise en oeuvre dans la présente invention en une quantité au moins cinq fois supérieure et notamment au moins dix fois supérieure à celle du (ou des) précurseur(s) métallique(s). Typiquement, la quantité d'électrolyte est comprise entre 0,1 M à 5 M, notamment entre 0,2 M et 2 M, en particulier, entre 0,3 M et 1 M et, plus particulièrement, de l'ordre de 0,5 M (i.e. 0,5 M ± 0,1 M).

La solution électrolytique mise en oeuvre lors de l'étape (b) du procédé selon l'invention peut contenir un ou plusieurs solvant(s). Typiquement, ce ou ces dernier(s) est(sont) polaire(s). Par « solvant polaire », on entend dans le cadre de la présente invention un solvant choisi dans le groupe constitué par l'eau, l'eau dé-ionisée, l'eau distillée, les solvants hydroxylés comme le méthanol, l'éthanol et l'isopropanol, les glycols liquides de faible poids moléculaire tels que l'éthylèneglycol, le diméthylsulfoxyde (DMSO), le diméthylformamide (DMF), l'acétonitrile, l'acétone, le tétrahydrofurane (THF) et leurs mélanges.

Avantageusement, le solvant de la solution électrolytique mise en oeuvre lors de l'étape (b) du procédé selon l'invention comprend ou est de l'eau.

En variante, le solvant de la solution électrolytique mise en oeuvre lors de l'étape (b) du procédé selon l'invention comprend ou est de l'acétonitrile.

En variante encore, le solvant de la solution électrolytique mise en oeuvre lors de l'étape (b) du procédé selon l'invention est un mélange d'acétonitrile et d'eau. Les proportions d'acétonitrile et d'eau dans la solution électrolytique mise en oeuvre lors de l'étape (b) du procédé selon l'invention peuvent être de 50 à 95% en volume pour l'acétonitrile et le complément à 100% pour l'eau. Ainsi, le mélange peut comporter entre 70 et 90% en volume d'acétonitrile et entre 10 et 30% en volume d'eau et notamment environ 80% (i.e. 80% ± 5%) en volume d'acétonitrile et environ 20% (i.e. 20% ± 5%) en volume d'eau.

Avantageusement, l'étape (b) du procédé selon l'invention comprend les sous-étapes consistant à :
b₁) mettre en contact les nanotubes de carbone synthétisés sur un support métallique tels que précédemment définis avec une solution électrolytique contenant le (ou les) précurseur(s) dudit oxyde métallique et au moins un nitrate tels que précédemment définis ;
b₂) polariser lesdits nanotubes de carbone, moyennant quoi une matrice en oxyde métallique est électrochimiquement déposée sur lesdits nanotubes de carbone.

Comme précédemment indiqué, le dépôt électrochimique de la matrice polymère conductrice de l'électricité sur les nanotubes de carbone lors de l'étape (b) ou lors de la sous-étape (b₂) du procédé selon l'invention peut impliquer soit une méthode cyclique, soit une méthode statique pulsée ou non avec soit la tension, soit le courant qui est imposé(e). Dans un mode de réalisation particulier, il est possible de réaliser ce dépôt électrochimique en combinant ces différentes méthodes. En d'autres termes, le procédé de dépôt par voie électrochimique peut se faire par une méthode cyclique et/ou une méthode galvanostatique pulsée ou continue et/ou une méthode potentiostatique pulsée ou continue. Le procédé de dépôt consiste à oxyder un monomère précurseur présent dans l'électrolyte pour le polymériser et assurer son dépôt sous forme d'un polymère électro-conducteur autour et sur les nanotubes de carbone.

Le dépôt électrochimique lors de l'étape (b) ou lors de la sous-étape (b₂) du procédé selon l'invention est typiquement réalisé dans une cellule électrochimique équipée de deux électrodes (électrode de travail et contre-électrode) ou trois électrodes (électrode de travail, contre-électrode et électrode de référence). L'électrode de travail (ou anode) correspond au support métallique, notamment en un matériau à base d'aluminium, doté des nanotubes de carbone, tandis que la contre-électrode (ou cathode) est, par exemple, une grille de platine ou une plaque de titane platiné ou une pâte de noir de carbone et de carbone activé encapsulés dans une grille d'inox ou une pâte de noir de carbone, de carbone activé et de téflon encapsulés dans une grille d'inox pour le contact électrique. La contre-électrode présente une surface et une capacitance adaptées à la surface et à la capacitance de l'électrode de travail. Lorsqu'elle est présente, l'électrode de référence qui permet de connaître, à tout moment, la valeur de la tension au niveau de l'électrode de travail est typiquement en métal comme, par exemple, un fil d'argent ou un fil de platine.

Le dispositif électrochimique mis en oeuvre dans l'invention comprend une cellule électrochimique telle que précédemment définie associée à un générateur de de tension ou un potentiostat.

Dans un mode de réalisation particulier du procédé selon l'invention, la méthode chronopotentiométrique est privilégiée car elle permet de contrôler plus facilement la quantité d'oxyde déposé. En particulier, la méthode chronopotentiométrique consiste à appliquer un courant constant à l'électrode. Durant cette application, le (ou les) précurseur(s) de l'oxyde métallique est(sont) oxydé(s). Le mode séquencé consiste à enchaîner des temps d'application du courant à l'électrode et donc du dépôt de l'oxyde métallique (t_{ON}) et des temps de repos (t_{OFF}) en appliquant, entre l'électrode de travail (anode) et la contre électrode (cathode), un courant constant.

Le temps de dépôt correspondant à l'oxydation du (ou des) précurseur(s) se fait en imposant un courant pendant un temps donné (t_{ON}). Pendant t_{OFF}, le (ou les) précurseur(s) n'est(ne sont) pas oxydés ce qui lui ou leur laisse le temps de diffuser au sein du tapis de nanotubes de carbone. Ce temps de repos t_{OFF} peut se faire par une ouverture du circuit électrique ou bien en imposant un courant plus bas que celui imposé durant le temps de dépôt t_{ON} et ne permettant pas d'oxyder le (ou les) précurseur(s). Lors de ce temps de repos t_{OFF}, une agitation de la solution électrolytique peut être mise en oeuvre pour faciliter la diffusion du (ou des) précurseur(s) au sein du tapis de nanotubes de carbone verticalement alignés.

Le générateur de courant du dispositif est apte à délivrer un courant de façon constante ou de façon discontinue. Avantageusement, le générateur de courant du dispositif est apte à délivrer un courant dont l'intensité est comprise entre 0,1 mA et 4 A, par exemple de l'ordre de 0,5 mA (i.e. 0,5 mA + 0,2 mA).

Lorsque le courant est délivré de façon discontinue, les périodes t_{ON} sont de l'ordre de 5 s à 60 s, par exemple de l'ordre de 10 s (i.e. 10 s ± 1 s), et les périodes t_{OFF} sont de l'ordre de 5 s à 120 s, par exemple de l'ordre de 5 s (i.e. 5 s ± 1 s). Le ratio t_{ON}/t_{OFF} est généralement compris entre 1 et 0,1 et, en particulier, entre 1 et 0,5. Typiquement, lorsque le courant est délivré de façon discontinue, le nombre de cycles est compris entre 10 et 500, notamment entre 100 et 300. A titre d'exemples particuliers, le nombre de cycles peut être de l'ordre de 80 (i.e. 80 ± 10) ou de l'ordre de 200 (i.e. 200 ± 20).

La durée de l'étape (b) ou de la sous-étape (b₂) du procédé selon l'invention est variable de quelques minutes à plusieurs heures. Typiquement, cette durée est comprise entre 5 min et 8 h, avantageusement entre 10 min et 4 h et, en particulier, entre 15 min et 2 h. Elle dépend de la quantité d'oxyde métallique à déposer pour avoir un dépôt homogène autour des nanotubes de carbone verticalement alignés. L'homme du métier saura adapter, sans effort inventif, cette durée en fonction de la densité et de la longueur des nanotubes de carbone verticalement alignés et de la quantité d'oxyde métallique à déposer.

L'étape (b) et notamment la sous-étape (b₂) du procédé selon l'invention sont réalisées à une température comprise entre 15°C et 100°C et avantageusement à température ambiante (i.e. 22°C ± 5°C). La température pourra être adaptée en fonction de la viscosité désirée pour la solution électrolytique.

Par ailleurs, l'étape (b) et notamment la sous-étape (b₂) du procédé selon l'invention sont réalisables sous atmosphère non contrôlée.

Il convient de noter que le dépôt électrochimique lors de l'étape (b) et notamment la sous-étape (b₂) du procédé selon l'invention peut être industrialisé, par exemple par une technique en batch to batch ou en défilé continu (technique dite en anglais « roll to roll ») avec le support métallique, notamment en un matériau à base d'aluminium baignant dans une solution électrolytique telle que précédemment définie.

La durée de l'étape (b) et notamment de la sous-étape (b₂) du procédé selon l'invention, permet d'ajuster le pourcentage en masse d'oxyde métallique par rapport à la masse totale du composite correspondant aux nanotubes de carbone verticalement alignés revêtus de cet oxyde métallique pour maximiser la capacitance du composite une fois fabriqué et ce, afin de fournir un supercondensateur utilisant un tel composite en tant qu'électrode, qui présente une capacitance la plus élevée possible. L'oxyde métallique représente un pourcentage massique par rapport à la masse totale dudit composite pouvant aller jusqu'à 90 %, notamment compris entre 10% et 80% et, en particulier, entre 40% et 70%. La masse de l'oxyde métallique et celle du composite peuvent être obtenues par ATG pour « Analyse Thermo Gravimétrique » et/ou par pesée et/ou par intégration du courant ayant traversé le circuit électrique durant l'étape de polymérisation.

Suite à l'étape (b) et notamment suite à la sous-étape (b₂), le procédé selon l'invention peut présenter une étape de rinçage et éventuellement une étape de séchage.

L'étape de rinçage a, pour but principal, de nettoyer, de retirer les résidus/impuretés du type précurseurs d'oxyde métallique qui resteraient sur des parties du support, des nanotubes de carbone ou de la matrice d'oxyde métallique et qui n'auraient pas été déposés. De tels résidus/impuretés pourraient engendrer des problèmes lors de l'étape d'encapsulation et des dysfonctionnements du supercondensateur. Avantageusement, l'étape de rinçage est réalisée en faisant tremper le support métallique doté des nanotubes de carbone et de la matrice d'oxyde métallique dans de l'eau, de l'éthanol, de l'acétonitrile ou un de leurs mélanges. Le rinçage consiste à faire tremper le support métallique doté des nanotubes de carbone et de la matrice d'oxyde métallique dans de l'eau pendant un temps variable de 1 à 30 min et en renouvelant l'opération si besoin jusqu'à cinq fois par exemple.

De plus, pour l'étape optionnelle de séchage du support métallique doté des nanotubes de carbone et de la matrice d'oxyde métallique, après le rinçage à l'eau, celui-ci est rincé à l'éthanol puis laissé à l'air libre afin que l'eau résiduelle et l'éthanol s'évaporent lentement. En variante, le support métallique doté des nanotubes de carbone et de la matrice d'oxyde métallique, une fois rincé, peut être séché en le chauffant, dans une étuve sous vide entre 50°C et 200°C et notamment à une température de l'ordre de 80°C (80°C ± 10°C), ou au moyen d'une lampe infrarouge, pendant une durée comprise entre 12 h et 36 h et notamment de l'ordre de 24 h (24 h ± 6 h). Cette variante peut être mise en oeuvre dans le cas d'un procédé en continu.

La présente invention concerne également une électrode susceptible d'être préparée par le procédé selon l'invention tel que précédemment défini. Cette électrode présente un support métallique doté des nanotubes de carbone et de la matrice d'oxyde métallique. Il s'agit donc d'une électrode monocouche.

Tout ce qui a été précédemment indiqué sur le support métallique s'applique également à l'électrode selon la présente invention. Dans le cadre de l'électrode selon l'invention, le support métallique est un support en un matériau à base d'aluminium.

Avantageusement, la densité des nanotubes de carbone verticalement alignés, dans l'électrode selon la présente invention peut être variable. Cette dernière est avantageusement comprise entre 10⁶ et 10¹³ nanotubes.cm⁻² d'électrode. Il est ainsi possible d'avoir un matériau présentant un tapis dense de nanotubes de carbone verticalement alignés, avec de l'ordre de 10⁸ à 10¹² nanotubes.cm⁻² et notamment de l'ordre de 10¹¹ à 10¹² nanotubes.cm⁻².

Le pourcentage en masse de la matrice d'oxyde métallique exprimée par rapport à la masse totale du composite comprenant les nanotubes de carbone et cette matrice est compris entre 10% et 90%, notamment compris entre 10% et 80%, en particulier, compris entre 40% et 70%.

Dans l'électrode selon l'invention, les nanotubes de carbone présentent avantageusement une longueur supérieure à 10 µm. Dans certains modes de réalisation, cette longueur peut être supérieure à 20 µm, voire supérieure à 30 µm ou à 50 µm.

Enfin, l'électrode selon l'invention possède avantageusement une capacitance d'au moins 160 mF/cm² ou 100 F.g⁻¹ par rapport à la masse totale du composite.

La présente invention concerne aussi l'utilisation d'une telle électrode ou susceptible d'être préparée par le procédé de l'invention comme électrode positive/négative d'un dispositif de stockage et de restitution de l'électricité tel qu'un supercondensateur ou une batterie, comme électrode pour dispositif photovoltaïque, dans les matériaux pour le stockage du CO₂ ou comme électrode pour capteurs électrochimiques. Ainsi, la présente invention concerne un dispositif comprenant une électrode selon la présente invention ou susceptible d'être préparée par le procédé de l'invention, ledit dispositif étant choisi dans le groupe constitué par un dispositif de stockage et de restitution de l'électricité tel qu'un supercondensateur ou une batterie ; un dispositif photovoltaïque ; un matériau pour le stockage du CO₂ et un capteur électrochimique.

Dans un mode de réalisation particulier, un dispositif de stockage et de restitution de l'électricité selon l'invention comprend au moins deux électrodes monocouche (positive et négative) ou bien au moins trois électrodes dont deux électrodes monocouches (positives) et une électrode double couche (négative). Pour rappel, une électrode monocouche ne comporte qu'une seule surface active, tandis qu'une électrode double couche comporte deux surfaces actives respectivement sur ses deux faces opposées.

D'autres caractéristiques et avantages de la présente invention apparaîtront encore à l'homme du métier à la lecture des exemples ci-après donnés à titre illustratif et non limitatif, en référence aux figures annexées.

### BRÈVE DESCRIPTION DES DESSINS

La Figure 1 présente les pastilles d'aluminium après une polarisation à 1,3 V vs une électrode au calomel saturée en KCI (ECS) pendant 60 min dans les électrolytes contenant différents sels d'électrolyte.
La Figure 2 présente la variation du potentiel au niveau de l'électrode de travail en fonction du temps et ce lors du dépôt par chronopotentiométrie continue réalisé sur des VACNT/AI en utilisant comme précurseur le Mnac(III).
La Figure 3 présente des micrographies en microscopie électronique à balayage (MEB) de VACNT nus sur aluminium (Figure 3A) et des mêmes VACNT après un dépôt électrochimique utilisant de l'acétate de manganèse(Ill) comme précurseur de MnO₂ à deux grossissements différents (Figures 3B et 3C).
La Figure 4 présente des micrographies en MEB de VACNT nus sur aluminium (Figure 4A) et des mêmes VACNT après un dépôt électrochimique utilisant de l'acétate de manganèse(lIl) comme précurseur de MnO₂ (Figure 4B).
La Figure 5 présente une micrographie en microscopie électronique par transmission (MET) de CNT après un dépôt électrochimique utilisant de l'acétate de manganèse(Il) comme précurseur de MnO₂.

### EXPOSÉ DÉTAILLÉ DE MODES DE RÉALISATION PARTICULIERS

### I. Effet de l'électrolyte sur un collecteur en aluminium

Les tapis de VACNT sur aluminium se décollent souvent et des trous peuvent apparaître dans le collecteur et ce, à cause de la corrosion de l'aluminium, en contact avec l'électrolyte et sous contrainte électrochimique. Par conséquent, les inventeurs ont cherché un électrolyte aqueux qui n'attaque pas l'aluminium dans les plages de potentiel utilisées lors du dépôt électrochimique d'oxyde métallique comme de l'oxyde de manganèse.

A cet effet, plusieurs électrolytes repris dans le Tableau I ci-après ont été testés.

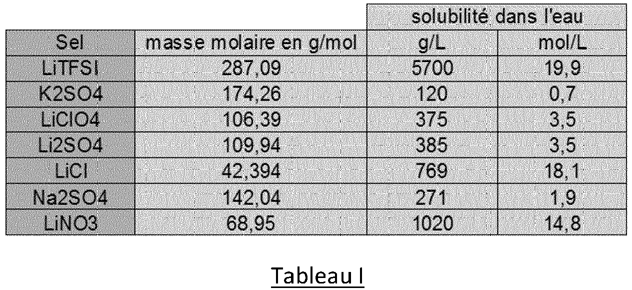

La solubilité limitée du K₂SO₄ dans l'eau implique une concentration limitée en sel. Aussi, tous les électrolytes ont été utilisés à une concentration de 0,5 mol/L.

Les pastilles d'aluminium utilisées pour cette étude sont des pastilles d'alliage d'aluminium (DP76) comprenant un pourcentage d'aluminium très élevé (>99%), et toutes nettoyées au préalable. Les tests sont effectués avec des cellules à 3 électrodes, où l'électrode de travail est la pastille de DP76, l'électrode de référence une électrode au calomel saturée en KCl (ECS) et la contre-électrode est une électrode en carbone activé.

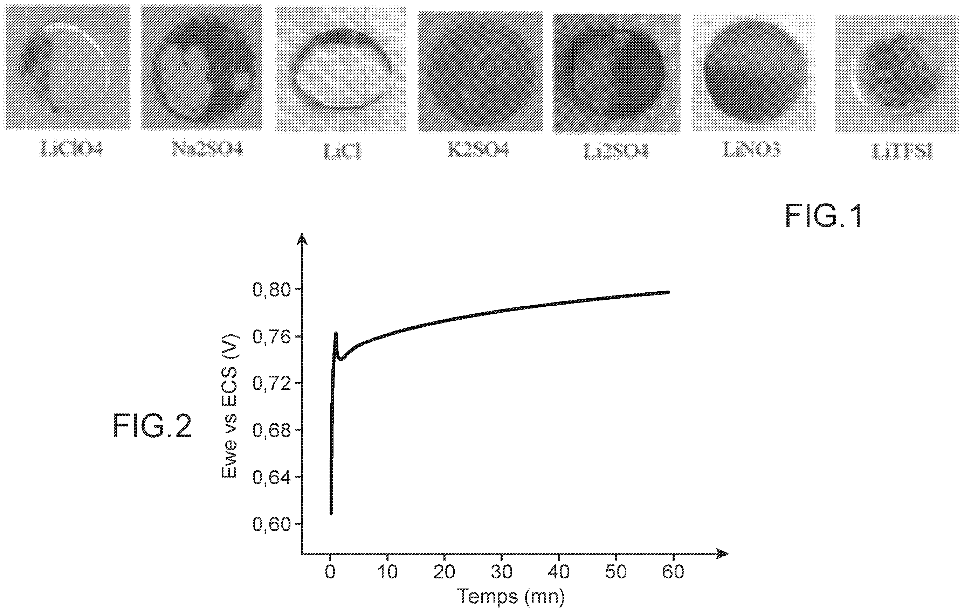

La première étape de l'étude est la caractérisation par mesure C(V) de chaque système, qui offre un aperçu de l'effet corrosif de l'électrolyte et permet d'identifier le potentiel de corrosion. Ensuite, la cellule est soumise à un potentiel fixe de 1,3 V pendant une durée de 60 min et l'évolution de la masse de la pastille est suivie par une ultra microbalance et ce, afin de déterminer la variation de la masse de la pastille qui serait liée à la dissolution d'aluminium suite à son oxydation dans l'électrolyte. La Figure 1 donne un aperçu des pastilles après cette expérience.

Tous les sels d'électrolytes conduisent à une dissolution de la pastille sauf LiNO₃. Les sels LiCI, LiClO₄ et Na₂SO₄ semblent être les plus corrosifs. Pour ces trois sels, la perte en masse de la pastille est respectivement de 85%, 65% et 43%. Elle est nulle dans l'électrolyte à base de LiNO₃.

Par ailleurs, les variations de masses dans l'électrolyte à base de LiNO₃ sont très faibles, et aucun dégât apparent n'est présent sur les pastilles d'aluminium au moins jusqu'à 1,5V vs ECS ce qui est intéressant et suffisant pour les dépôts électrochimiques d'oxyde métallique.

Enfin des tests en chronopotentiométrie (courant imposé) montrent également le caractère passif de la surface d'aluminium en présence de LiNO₃ (augmentation du potentiel à l'application du courant jusqu'à 1.5 V sans aucune baisse ensuite). Dans les autres sels, on peut identifier aisément un phénomène de transpassivation et le passage en zone active où le matériau peut s'oxyder à des potentiels relativement faibles.

En conclusion, le sel support à base d'anions nitrate (NO₃⁻) tel que le LiNO₃ est retenu pour la suite de l'étude sur aluminium puisque la présence d'anions Cl⁻, SO₄²⁻, TFSI⁻ et ClO₄⁻ conduit à la corrosion de l'aluminium.

### II. Préparation des VACNT

### II.1. Procédé de croissance sur acier inoxydable

Le procédé de CVD injection permet la croissance efficace et reproductible de VACNT sur des substrats en acier inoxydable 316L sous forme de pastilles présentant une épaisseur comprise entre 50 et 500 µm et un diamètre compris entre 8 et 16 mm.

Pour cela, le procédé nécessite le dépôt initial d'une sous-couche de céramique (à base de SiOx) obtenue à partir de toluène et d'orthosilicate de tétraéthyle (TEOS), à la surface du substrat avant l'étape de croissance de nanotubes. Différentes durées d'injection ont ainsi été testées dans le but de déposer une sous-couche céramique à la fois suffisamment épaisse pour remplir son rôle de barrière de diffusion pour les particules métalliques et suffisamment fine pour ne pas faire augmenter la résistance électrique des électrodes. La nature de l'atmosphère de réaction permet de jouer sur le diamètre et la densité en nanotubes de carbone des tapis formés sur le support métallique. La demande internationale WO 2009/103925 décrit notamment un tel procédé **[10].**

Les VACNT de faible densité sur inox sont obtenus à 800 ou 850°C à partir d'une solution Toluène/ferrocène (2,5% en masse) injecté sous argon uniquement. La durée de synthèse Toluène/ferrocène est fonction de l'épaisseur de tapis souhaitée, typiquement de 3 à 5 min pour 100 µm.

Les VACNT de forte densité sur inox sont obtenus à partir de la même solution Toluène/ferrocène mais avec une atmosphère de réaction à base d'argon/hydrogène et d'acétylène et ce, pour une température variant entre 600 et 800°C.

Ainsi, le dépôt d'oxyde métallique (MnO₂) a été réalisé sur des tapis de VACNT sur inox (15 à 200 µm longueur et 10-40 nm diamètre externe moyen) contrôlés par microscopie électronique à balayage (MEB) et microscopie électronique en transmission (MET). Les densités surfaciques mesurées se trouvent dans la gamme 1 à 5×10⁹ VACNT/cm² pour des VACNT de diamètre moyen de 40 nm (faible densité) et dans la gamme 1 à 5×10¹¹ VANTC/cm² pour des VACNT de diamètre moyen de 10 nm (forte densité).

### II.2. Procédé de croissance sur aluminium

Concernant la croissance CVD directe de VACNT sur aluminium, l'abaissement de la température de croissance des tapis de NTC alignés (580 à 615°C suivant les atmosphères de réaction) est possible grâce notamment à l'emploi d'une source gazeuse de carbone (C₂H₂) en présence d'hydrogène et du précurseur métallique ferrocène.

Pour les fortes densités sur aluminium, on travaille autour de 600°C avec une solution Toluène/ferrocène à 10% et un mélange d'argon/hydrogène et d'acétylène. La durée de synthèse Toluène/ferrocène est également fonction de l'épaisseur de tapis souhaitée, typiquement 20 ou 30 min pour atteindre 100 µm.

Malgré des vitesses de croissance de NTC plus faibles qu'à plus hautes températures (<10 µm.min⁻¹ à 580°C), il est possible de réaliser des électrodes VACNT/AI sans prétraitement de la surface de l'aluminium (brut ou alliage). Les caractéristiques (longueur contrôlable de 10 à 100 µm, diamètre externe moyen: 6-12 nm) sont au niveau de l'état de la technique. Les densités surfaciques mesurées sont très supérieures à celles obtenues sur inox sans acétylène : dans la gamme 1 à 5×10¹¹ NTC/cm².

La demande internationale WO 2015/071408 décrit notamment de tels procédés **[6].**

### III. Dépôt d'oxyde de manganèse par voie électrochimique

Différents précurseurs à base d'acétate de manganèse ont été utilisés afin de déposer par oxydation des oxydes de manganèse à la surface des VACNT.

Des dépôts ont été réalisés sur des VACNT sur aluminium, de fortes densités (10¹¹ NTC/cm²) et d'épaisseur 20 µm dans un électrolyte aqueux comprenant un précurseur d'oxyde de manganèse se présentant sous forme d'acétate de manganèse (Mnac(II)) à 0,08 mol.L-1 avec LiNO₃ (0,5 mol.L-1) dans H₂O ou Mnac(III) à 0,1 mol.L-1 avec LiNO₃ (0,5 mol.L-1) dans H₂O.

La méthode électrochimique utilisée ici est la voie chronopotentiométrique continue. Une intensité de 0,3 mA est appliquée sur l'électrode durant 60 min afin de déposer l'oxyde de manganèse à sa surface. Il est possible de faire varier la quantité d'oxyde déposée en augmentant ou en diminuant la durée de l'électrodépôt (de 2 à 90 min). Après le dépôt électrochimique de la couche d'oxyde, les électrodes sont rincées à l'eau pour évacuer les traces de précurseur d'oxyde. Pour mesurer la masse de MnO₂ déposé, le rinçage à l'eau est suivi d'un rinçage à l'éthanol puis d'un séchage dans une étuve à 80°C sous vide pendant une journée.

Dans le cadre du dépôt par chronopotentiométrie continue réalisé sur les VACNT/aluminium en utilisant comme précurseur du Mnac(lll), une augmentation rapide du potentiel a lieu jusqu'à 0,76 V correspondant au recouvrement complet de l'électrode de travail par l'électrolyte. Une autre augmentation, plus lente cette fois, correspond au dépôt d'oxyde de manganèse sur une électrode de plus en plus recouverte de ce même oxyde (Figure 2).

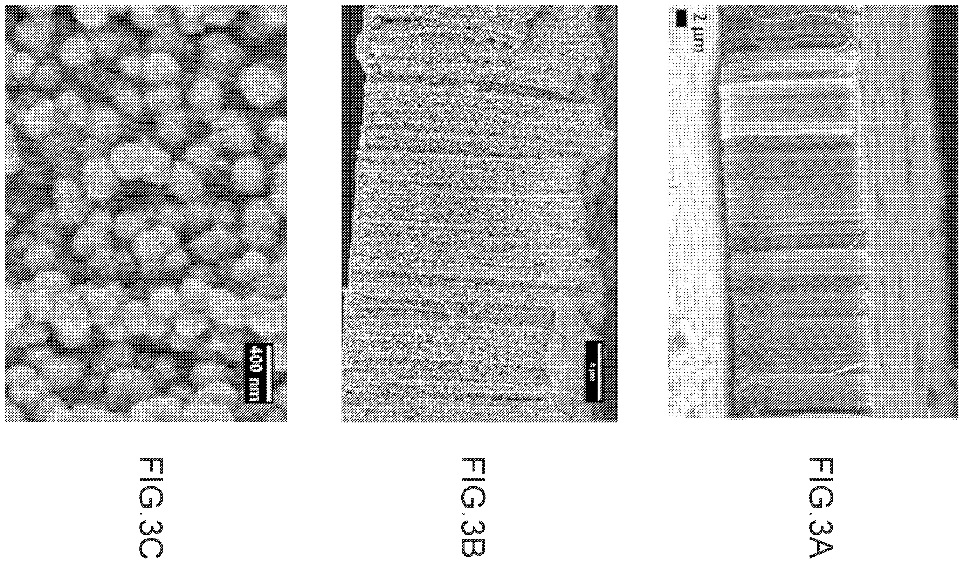

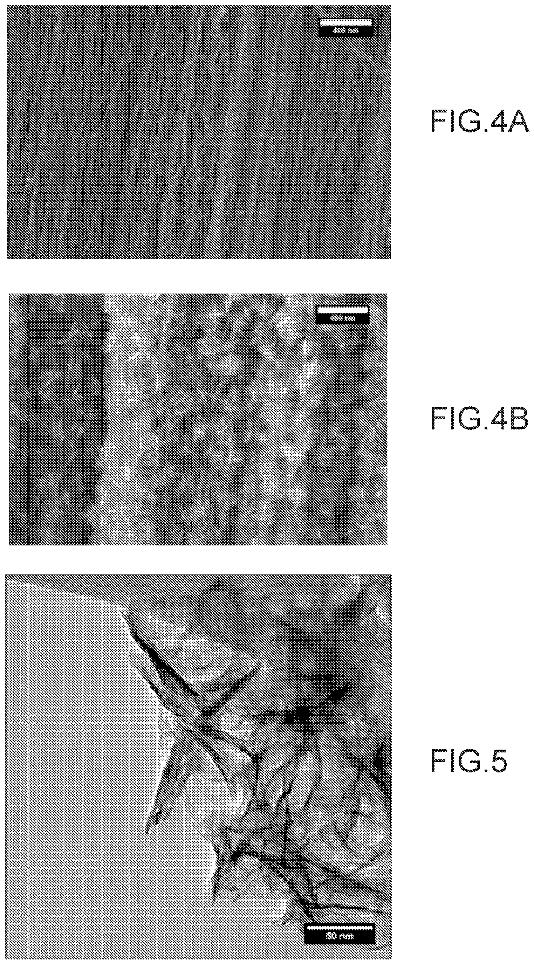

Dans ces conditions de dépôt, le tapis de VACNT est recouvert de façon homogène par l'oxyde de manganèse dans l'ensemble de sa profondeur (Figures 3 à 5). L'oxyde de manganèse peut se présenter sous forme de sphères très poreuses dans l'espace inter-tube du tapis de VACNT et dans l'ensemble de son épaisseur. Ces sphères ont des diamètres compris entre 150 et 250 nm (Figures 3B et 3C).

Afin de caractériser la capacitance par unité de surface de l'électrode selon l'invention et la comparer à celle de la même électrode (même support doté des nanotubes de carbone et même surface spécifique) mais sans dépôt d'oxyde métallique, la technique de voltammétrie cyclique a été utilisée en imposant une tension entre 0 et -0,8 V vs Electrode au calomel saturée à une vitesse de balayage de 2 mV/s pendant 5 cycles cycles, dans un électrolyte aqueux (LiNO₃ à 0,5 M).

Après le dépôt d'oxyde de manganèse à partir du Mnac(ll), les performances sont grandement améliorées. Les capacitances des VACNT nus de l'ordre de 30 F/g (7mF/cm²) passent à 140-170 F/g (120 mF/cm²). Après le dépôt d'oxyde de manganèse à partir du Mnac(III), la capacitance du composite a été évaluée à 260 F/g soit 8 fois plus que celle des VACNT nus.

### RÉFÉRENCES

**[1]** Fan et al, 2008, « High dispersion of γ-MnO2 on well-aligned carbon nanotube arrays and its application in supercapacitors », Diamond & Related Materials, vol. 17, pages 1943-1948.
**[2]** Amade et al, 2011, « Optimization of MnO2/vertically aligned carbon nanotube composite for supercapacitor application », J. of Power Sources, vol. 196, pages 5779-5783.
**[3]** Demande de brevet CN 103346021 au nom de Aluminium Corporation of China Ltd publiée le 9 octobre 2013.
**[4]** Pinault et al, 2005, « Growth of multiwalled carbon nanotubes during the initial stages of aerosol-assisted CCVD », Carbon, vol. 43, pages 2968-2976.
[5] Pinault et al, 2005, « Evidence of sequential lift in growth of aligned multi-walled carbon nanotube multilayers », Nano Lett., vol. 5, pages 2394-2398.
**[6]** Demande internationale WO 2015/071408 au nom du CEA publiée le 21 mai 2015.
**[7]** Dorfler et al, 2013, « High power supercap électrodes based on vertically aligned carbon nanotubes on aluminum », J. of Power Sources, vol. 227, pages 218-228.
**[8]** Liatard et al, 2015, « Vertically aligned carbon nanotubes on aluminum as a light-weight positive electrode for lithium-polysulfide batteries », Chemical Communications, vol. 51, pages 7749-7752.
**[9]** Arcila-Velez et al, 2014, « Roll-to-roll synthesis of vertically aligned carbon nanotube électrodes for electrical double layer capacitors », Nano Energy, vol. 8, pages 9-16.
**[10]** Demande internationale WO 2009/103925 au nom du CEA publiée le 27 aout 2009

## Revendications

1. Procédé pour la préparation d'une électrode comprenant un support métallique, des nanotubes de carbone verticalement alignés et un oxyde métallique déposé sur toute la longueur desdits nanotubes de carbone verticalement alignés, ledit procédé comprenant les étapes successives suivantes :
a) synthétiser, sur un support métallique, un tapis de nanotubes de carbone verticalement alignés ;
b) déposer électrochimiquement ledit oxyde métallique sur lesdits nanotubes de carbone à partir d'une solution électrolytique comprenant au moins un précurseur dudit oxyde métallique et au moins un nitrate comme anion de l'électrolyte.

2. Procédé selon la revendication 1, **caractérisé en ce que** ledit support métallique est un support en un matériau à base de titane, de nickel, d'aluminium, de cuivre, de chrome, de tantale, de platine, d'or, d'argent ou d'acier inoxydable, de silicium ou de carbone.

3. Procédé selon la revendication 1 ou 2, **caractérisé en ce que**, suite à ladite étape (a) et préalablement à ladite étape (b), les nanotubes de carbone verticalement alignés peuvent être soumis à un traitement oxydant.

4. Procédé selon l'une quelconque des revendications 1 à 3, **caractérisé en ce que** ledit oxyde métallique est un oxyde d'au moins un métal de transition.

5. Procédé selon l'une quelconque des revendications 1 à 4, **caractérisé en ce que** ledit oxyde métallique est choisi dans le groupe constitué par un oxyde de ruthénium (RuO₂), un oxyde de titane (TiOz), un oxyde de manganèse (MnO, Mn₃O₄, Mn₂O₃ ou MnOz), un oxyde de cuivre (CuzO), un oxyde de nickel (NiO, NiO₂ ou Ni₂O₃), un oxyde de cobalt (Co₂O₃ ou Co₃O₄), un oxyde de fer (Fe₂O₃ ou Fe₃O₄), un oxyde de chrome (CrOz, Crûs ou Cr₂O₃), un oxyde de vanadium (VO₂, V₂O₃ ou V₂O₅) et un de leurs mélanges.

6. Procédé selon l'une quelconque des revendications 1 à 5, **caractérisé en ce que** ledit précurseur dudit oxyde métallique est choisi dans le groupe constitué par les acétates, les nitrates, et les halogénures de ruthénium, de titane, de manganèse, de cuivre, de nickel, de cobalt, de fer, de chrome ou de vanadium.

7. Procédé selon l'une quelconque des revendications 1 à 6, **caractérisé en ce que** ledit précurseur dudit oxyde métallique est choisi dans le groupe constitué par le biacétate de ruthénium, l'acétate de titane, l'acétate de manganèse(Il), l'acétate de manganèse(Ill), l'acétate de cuivre(ll), l'acétate de nickel(II), l'acétate de cobalt(II), l'acétate de fer(ll), l'acétate de fer(III), l'acétate de chrome(ll), l'acétate de chrome(III), l'acétate de vanadium(III), le nitrate de titane, le nitrate de manganèse(Il), le nitrate de manganèse(Ill), le nitrate de cuivre(II), le nitrate de nickel(II), le nitrate de cobalt(II), le nitrate de fer(II), le nitrate de fer(III), le nitrate de chrome(ll), le nitrate de chrome(III), le nitrate de vanadium(III), le chlorure de titane, le chlorure de manganèse(Il), le chlorure de manganèse(Ill), le chlorure de cuivre(II), le chlorure de nickel(II), le chlorure de cobalt(II), le chlorure de fer(ll), le chlorure de fer(III), le chlorure de chrome(ll), le chlorure de chrome(lIl) et le chlorure de vanadium(III).

8. Procédé selon l'une quelconque des revendications 1 à 7, **caractérisé en ce que** ledit précurseur dudit oxyde métallique est présent dans ladite solution électrolytique en une quantité comprise entre 1 mM à 1 M, notamment entre 0,01 M et 0.5 M, en particulier, entre 0,05 M et 0,2 M et, plus particulièrement, de l'ordre de 0,1 M (i.e. 0,1 M + 0,02 M).

9. Procédé selon l'une quelconque des revendications 1 à 8, **caractérisé en ce que** ladite solution électrolytique contient un ou plusieurs solvant(s) polaire(s).

10. Procédé selon l'une quelconque des revendications 1 à 9, **caractérisé en ce que**, suite à ladite étape (b), ledit procédé présente une étape de rinçage et éventuellement une étape de séchage.

11. Electrode susceptible d'être préparée par un procédé tel que défini à l'une quelconque des revendications 1 à 10, dans laquelle le support métallique est un support en un matériau à base d'aluminium.

12. Electrode selon la revendication 11, **caractérisée en ce que** la densité desdits nanotubes de carbone verticalement alignés est comprise entre 10⁶ et 10¹³ nanotubes.cm⁻² d'électrode, avantageusement, de l'ordre de 10⁸ à 10¹² nanotubes.cm⁻² et notamment de l'ordre de 10¹¹ à 10¹² nanotubes.cm⁻².

13. Utilisation d'une électrode selon la revendication 11 ou 12 ou susceptible d'être préparée par un procédé tel que défini à l'une quelconque des revendications 1 à 10 comme électrode positive/négative d'un dispositif de stockage et de restitution de l'électricité tel qu'un supercondensateur ou une batterie, comme électrode pour dispositif photovoltaïque, dans les matériaux pour le stockage du CO₂ ou comme électrode pour capteurs électrochimiques.

## Patentansprüche

1. Verfahren zum Herstellen einer Elektrode, die einen Metallträger, vertikal ausgerichtete Kohlenstoff-Nanoröhren und ein Metalloxid, das über die gesamte Länge der vertikal ausgerichteten Kohlenstoff-Nanoröhren abgeschieden ist, umfasst, wobei das Verfahren die folgenden aufeinanderfolgenden Schritte umfasst:
a) Synthetisieren einer Matte aus vertikal ausgerichteten Kohlenstoff-Nanoröhrchen auf einem Metallträger; und
b) elektrochemisches Abscheiden des Metalloxids auf den Kohlenstoff-Nanoröhren aus einer Elektrolytlösung, die mindestens einen Vorläufer des Metalloxids und mindestens ein Nitrat als Anion des Elektrolyten umfasst.

2. Verfahren nach Anspruch 1, **dadurch gekennzeichnet, dass** der Metallträger aus einem Material auf Basis von Titan, Nickel, Aluminium, Kupfer, Chrom, Tantal, Platin, Gold, Silber oder Edelstahl, Silizium oder Kohlenstoff ist.

3. Verfahren nach Anspruch 1 oder 2, **dadurch gekennzeichnet, dass** die vertikal ausgerichteten Kohlenstoff-Nanoröhren nach Schritt (a) und vor Schritt (b) einer oxidativen Behandlung unterzogen werden.

4. Verfahren nach einem der Ansprüche 1 bis 3, **dadurch gekennzeichnet, dass** das Metalloxid ein Oxid von mindestens einem Übergangsmetall ist.

5. Verfahren nach einem der Ansprüche 1 bis 4, **dadurch gekennzeichnet, dass** das Metalloxid aus der Gruppe ausgewählt ist, die aus einem Rutheniumoxid (RuO₂), einem Titanoxid (TiO₂), einem Manganoxid (MnO, Mn₃O₄, Mn₂O₃ oder MnO₂), einem Kupferoxid (Cu₂O), einem Nickeloxid (NiO, NiO₂ oder Ni₂O₃), einem Kobaltoxid (Co₂O₃ oder Co₃O₄), einem Eisenoxid (Fe₂O₃ oder Fe₃O₄), einem Chromoxid (CrO₂, CrO₃ oder Cr₂O₃), einem Vanadiumoxid (VO₂, V₂O₃ oder V₂O₅) und Mischungen davon besteht.

6. Verfahren nach einem der Ansprüche 1 bis 5, **dadurch gekennzeichnet, dass** der Vorläufer des Metalloxids aus der Gruppe ausgewählt ist, die aus Acetaten, Nitraten und Halogeniden von Ruthenium, Titan, Mangan, Kupfer, Nickel, Kobalt, Eisen, Chrom oder Vanadium besteht.

7. Verfahren nach einem der Ansprüche 1 bis 6, **dadurch gekennzeichnet, dass** der Vorläufer des Metalloxids aus der Gruppe ausgewählt ist, die aus Rutheniumbiacetat, Titanacetat, Mangan(II)-acetat, Mangan(III)-acetat, Kupfer(II)-acetat, Nickel(II)-acetat, Kobalt(II)-acetat, Eisen(II)-acetat, Eisen(III)-acetat, Chrom(II)-acetat, Chrom(III)-acetat, Vanadium(III)-acetat, Titannitrat, Mangan(II)-nitrat, Mangan(III)-nitrat, Kupfer(II)-nitrat, Nickel(II)-nitrat, Kobalt(II)-nitrat, Eisen(II)-nitrat, Eisen(III)-nitrat, Chrom(II)-nitrat, Chrom(III)-nitrat, Vanadium(III)-nitrat, Titanchlorid, Mangan(II)-chlorid, Mangan(III)-chlorid, Kupfer(II)-chlorid, Nickel(II)-chlorid, Kobalt(II)-chlorid, Eisen(II)-chlorid, Eisen(III)-chlorid, Chrom(II)-chlorid, Chrom(III)-chlorid und Vanadium(III)-chlorid besteht.

8. Verfahren nach einem der Ansprüche 1 bis 7, **dadurch gekennzeichnet, dass** der Vorläufer des Metalloxids in der Elektrolytlösung in einer Menge zwischen 1 mM und 1 M, insbesondere zwischen 0,01 M und 0,5 M, vor allem zwischen 0,05 M und 0,2 M und ganz besonders in der Größenordnung von 0,1 M (d. h. 0,1 M + 0,02 M), vorhanden ist.

9. Verfahren nach einem der Ansprüche 1 bis 8, **dadurch gekennzeichnet, dass** die Elektrolytlösung ein oder mehrere polare Lösungsmittel beinhaltet.

10. Verfahren nach einem der Ansprüche 1 bis 9, **dadurch gekennzeichnet, dass** das Verfahren nach Schritt (b) einen Schritt des Spülens und gegebenenfalls einen Schritt des Trocknens aufweist.

11. Elektrode, die geeignet ist, durch ein wie in einem der Ansprüche 1 bis 10 definiertes Verfahren hergestellt zu werden, wobei der Metallträger ein Träger aus einem Material auf Aluminiumbasis ist.

12. Elektrode nach Anspruch 11, **dadurch gekennzeichnet, dass** die Dichte der vertikal ausgerichteten Kohlenstoff-Nanoröhren zwischen 10⁶ und 10¹³ Nanoröhren.cm⁻² der Elektrode, vorteilhafterweise in der Größenordnung von 10⁸ und 10¹² Nanoröhren.cm⁻² und insbesondere in der Größenordnung von 10¹¹ und 10¹² Nanoröhren.cm⁻², beträgt.

13. Verwendung einer Elektrode nach Anspruch 11 oder 12, oder die geeignet ist, durch ein wie in einem der Ansprüche 1 bis 10 definiertes Verfahren hergestellt zu werden, als positive/negative Elektrode einer Vorrichtung zum Speichern und Wiedergeben von Elektrizität, wie etwa eines Superkondensators oder einer Batterie, als Elektrode für eine photovoltaische Vorrichtung, in Materialien für die CO₂-Speicherung oder als Elektrode für elektrochemische Sensoren.

## Claims

1. A method for preparing an electrode comprising a metal support, vertically aligned carbon nanotubes and a metal oxide deposited over the entire length of said vertically aligned carbon nanotubes, said method comprising the following successive steps:
a) synthesizing, on a metal support, a mat of vertically aligned carbon nanotubes;
b) electrochemically depositing said metal oxide on said carbon nanotubes from an electrolyte solution comprising at least one precursor of said metal oxide and at least one nitrate as anion of the electrolyte.

2. The method according to claim 1, **characterized in that** said metal support is a support made of a material based on titanium, nickel, aluminum, copper, chromium, tantalum, platinum, gold, silver or stainless steel, silicon or carbon.

3. The method according to claim 1 or 2, **characterized in that**, following said step (a) and prior to said step (b), the vertically aligned carbon nanotubes can be subjected to an oxidizing treatment.

4. The method according to any one of claims 1 to 3, **characterized in that** said metal oxide is an oxide of at least one transition metal.

5. The method according to any one of claims 1 to 4, **characterized in that** said metal oxide is selected from the group consisting of a ruthenium oxide (RuO₂), a titanium oxide (TiO₂), a manganese oxide (MnO, Mn₃O₄, Mn₂O₃ or MnO₂), a copper oxide (Cu₂O), a nickel oxide (NiO, NiO₂ or Ni₂O₃), a cobalt oxide (Co₂O₃ or Co₃O₄), an iron oxide (Fe₂O₃ or Fe₃O₄), a chromium oxide (CrO₂, CrO₃ or Cr₂O₃), a vanadium oxide (VO₂, V₂O₃ or V₂O₅) and one of the mixtures thereof.

6. The method according to any one of claims 1 to 5, **characterized in that** said precursor of said metal oxide is selected from the group consisting of acetates, nitrates, and halides of ruthenium, titanium, manganese, copper, nickel, cobalt, iron, chromium or vanadium.

7. The method according to any one of claims 1 to 6, **characterized in that** said precursor of said metal oxide is selected from the group consisting of ruthenium biacetate, titanium acetate, manganese(II) acetate, manganese(III) acetate, copper(II) acetate, nickel(II) acetate, cobalt(II) acetate, iron(II) acetate, iron(III) acetate, chromium(II) acetate, chromium(III) acetate, vanadium(III) acetate, titanium nitrate, manganese(II) nitrate, manganese(III) nitrate, copper(II) nitrate, nickel(II) nitrate, cobalt(II) nitrate, iron(II) nitrate, iron(III) nitrate, chromium(II) nitrate, chromium(III) nitrate, vanadium(III) nitrate, titanium chloride, manganese(II) chloride, manganese(III) chloride, copper(II) chloride, nickel(II) chloride, cobalt(II) chloride, iron(II) chloride, iron(III) chloride, chromium(II) chloride, chromium(III) chloride and vanadium(III) chloride .

8. The method according to any one of claims 1 to 7, **characterized in that** said precursor of said metal oxide is present in said electrolyte solution in an amount comprised between 1 mM to 1 M, in particular between 0.01 M and 0.5 M, in particular, between 0.05 M and 0.2 M and, more particularly, in the range of 0.1 M (i.e. 0.1 M + 0.02 M).

9. The method according to any one of claims 1 to 8, **characterized in that** said electrolyte solution contains one or more polar solvent(s).

10. The method according to any one of claims 1 to 9, **characterized in that**, following said step (b), said method has a rinsing step and optionally a drying step.

11. An electrode likely to be prepared by a method as defined in any one of claims 1 to 10, wherein the metal support is a support made of an aluminum-based material.

12. The electrode according to claim 11, **characterized in that** the density of said vertically aligned carbon nanotubes is comprised between 10⁶ and 10¹³ nanotubes.cm⁻² of electrode, advantageously, in the range of 10⁸ to 10¹² nanotubes.cm⁻² and in particular in the range of 10¹¹ to 10¹² nanotubes.cm⁻².

13. A use of an electrode according to claim 11 or 12 or likely to be prepared by a method as defined in any one of claims 1 to 10 as a positive/negative electrode of a device for storing and restoring electricity such as a supercapacitor or a battery, as an electrode for a photovoltaic device, in the materials for storing CO₂ or as an electrode for electrochemical sensors.
